# EUROPEAN PATENT APPLICATION

(11) **EP 3 958 220 A1**
(43) Date of publication of application: **23.02.2022**
(21) Application number: 21189824.2
(22) Date of filing: 05.08.2021
(51) Int. Cl.: G06V 30/14, G06V 20/62

(54) **METHOD FOR REAL TIME EXTRACTION OF CONTENT WRITTEN ON A WHITEBOARD**

(30) Priority: 17.08.2020 US 202016995311
(71) Applicant: Konica Minolta Business Solutions U.S.A., Inc., Foster City, CA 94404 (US)
(72) Inventor: BELLERT, Darrell E., Foster City, 94404 (US)
(74) Representative: Gille Hrabal Partnerschaftsgesellschaft mbB Patentanwälte

(57) **Abstract**

A method to extract content written on a marker board is disclosed. The method includes generating, by a computer processor, a sequence of samples from a video stream, wherein the video stream comprises a series of images of the marker board, generating, by the computer processor, a center of mass (COM) of foreground content of each sample in the sequence of samples, detecting, by the computer processor and based on a predetermined criterion, a stabilized change of the COM in the sequence of samples, and extracting, based at least on detecting the stabilized change, a portion of static written content from the video stream.

## Description

### BACKGROUND

Whiteboards, also known as dry-erase boards, are different from blackboards in that whiteboards include a smoother writing surface that allows rapid marking and erasing of markings. Specifically, whiteboards usually include a glossy white surface for making nonpermanent markings, and are used in many offices, meeting rooms, school classrooms, and other work environments. Whiteboards may also be used to facilitate collaboration among multiple remote participants (referred to as collaborating users) that are sharing information. In such collaborations, one or more cameras are pointed at the whiteboard to share a user's written or drawn content with other participants.

### SUMMARY

In general, in one aspect, the invention relates to a method to extract content written on a marker board. The method includes generating, by a computer processor, a sequence of samples from a video stream, wherein the video stream comprises a series of images of the marker board, generating, by the computer processor, a center of mass (COM) of foreground content of each sample in the sequence of samples, detecting, by the computer processor and based on a predetermined criterion, a stabilized change of the COM in the sequence of samples, and extracting, based at least on detecting the stabilized change, a portion of static written content from the video stream.

In general, in one aspect, the invention relates to a system for extracting content written on a marker board. The system includes a memory, and a computer processor connected to the memory that generates a sequence of samples from a video stream, wherein the video stream comprises a series of images of the marker board, generates a center of mass (COM) of foreground content of each sample in the sequence of samples, detects, based on a predetermined criterion, a stabilized change of the COM in the sequence of samples, and extracts, based at least on detecting the stabilized change, a portion of static written content from the video stream.

In general, in one aspect, the invention relates to a non-transitory computer readable medium (CRM) storing instructions for extracting content written on a marker board. The computer readable program code, when executed by a computer, includes functionality for generating a sequence of samples from a video stream, wherein the video stream comprises a series of images of the marker board, generating a center of mass (COM) of foreground content of each sample in the sequence of samples, detecting, based on a predetermined criterion, a stabilized change of the COM in the sequence of samples, and extracting, based at least on detecting the stabilized change, a portion of static written content from the video stream.

Other aspects of the invention will be apparent from the following description and the appended claims.

### BRIEF DESCRIPTION OF DRAWINGS

FIG. 1 shows a system in accordance with one or more embodiments of the invention.
FIG. 2 shows a flowchart in accordance with one or more embodiments of the invention.
FIGS. 3A-3D show an implementation example in accordance with one or more embodiments of the invention.
FIG. 4 shows a computing system in accordance with one or more embodiments of the invention.

### DETAILED DESCRIPTION

Specific embodiments of the invention will now be described in detail with reference to the accompanying figures. Like elements in the various figures are denoted by like reference numerals for consistency.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

In general, embodiments of the invention provide a method, non-transitory computer readable medium, and system for extracting written content from a marker board using a live video stream or pre-recorded video where one or more users are interacting with the marker board. In a collaboration session between collaborating users, the extracted content is sent to the collaborating user in real time while one or more users are writing/drawing on the marker board. One or more embodiments of the invention minimize the amount of extraction updates sent to collaborating users by limiting the extraction updates to occur only when content changes in a specific region of the marker board.

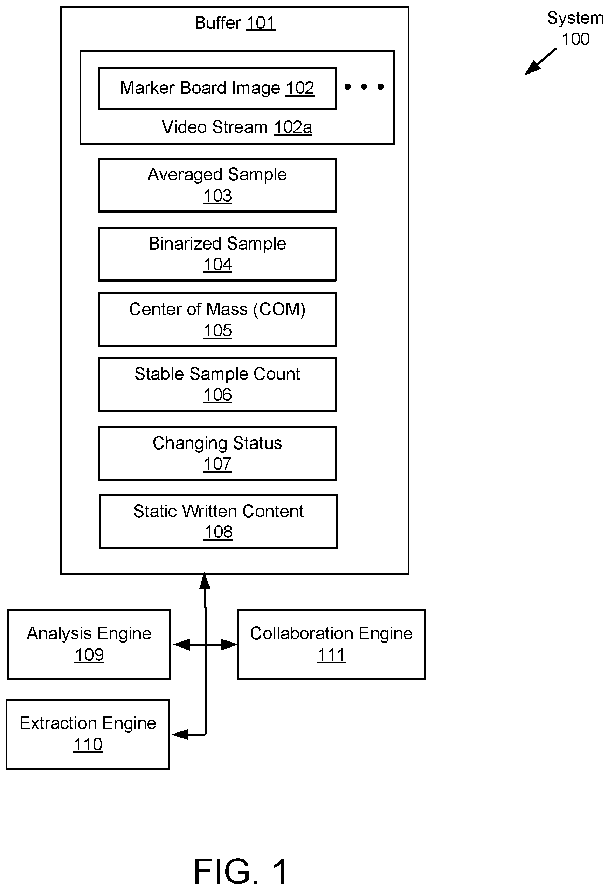

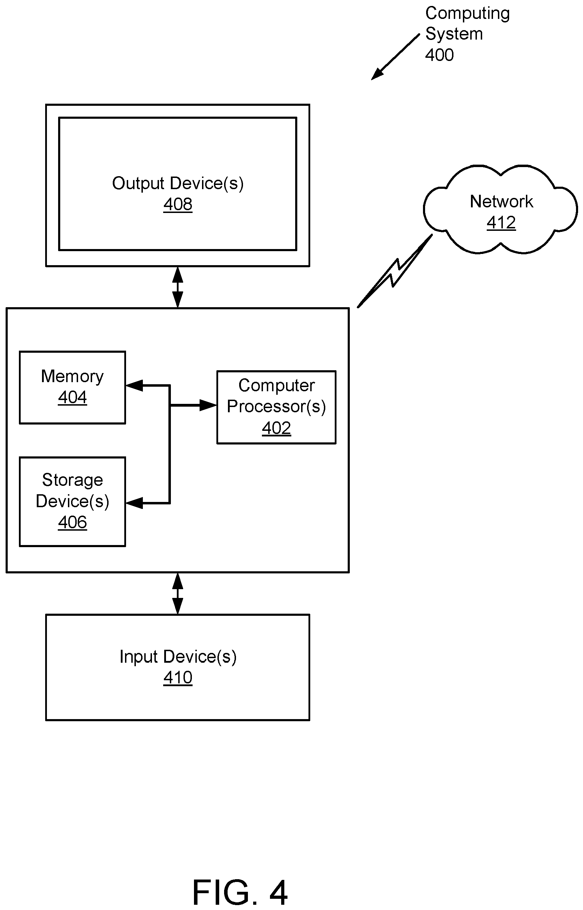

FIG. 1 shows a system (100) in accordance with one or more embodiments of the invention. As shown in FIG. 1, the system (100) has multiple components, including, for example, a buffer (101), an analysis engine (109), an extraction engine (110), and a collaboration engine (111). Each of these components (101, 109, 110, 111) may be implemented in hardware (*i.e.,* circuitry), software, or any combination thereof. Further, each of these components (101, 109, 110, 111) may be located on the same computing device (e.g., personal computer (PC), laptop, tablet PC, smart phone, multifunction printer, kiosk, server, etc.) or on different computing devices connected by a network of any size having wired and/or wireless segments. In one or more embodiments, these components may be implemented using the computing system (400) described below in reference to FIG. 4. Each of these components is discussed below.

In one or more embodiments of the invention, the buffer (101) is configured to store a marker board image (102). The marker board image (102) is an image of a writing surface of a marker board captured using one or more camera devices (e.g., a video camera, a webcam, etc.). In particular, the marker board image (102) may be one image in a series of images in a video stream (102a) of the captured marker board, and may be of any size and in any image format (e.g., BMP, JPEG, TIFF, PNG, etc.).

The marker board is a whiteboard, blackboard, or other similar type of writing material. The writing surface is the surface of the marker board where a user writes, draws, or otherwise adds marks and/or notations. Throughout this disclosure, the terms "marker board" and "the writing surface of the marker board" may be used interchangeably depending on context.

The marker board image (102) may include content that is written and/or drawn on the writing surface by one or more users. Once written and/or drawn on the writing surface, the content stays unchanged until the content is removed (e.g., the content is erased by a user). In one or more embodiments, the written and/or drawn content is referred to as static written content (108). Additionally, the marker board image (102) may include content resulting from a user's motion in front of the marker board or sensor noise generated by the camera device. The static written content (108) and content due to the user's motion or sensor noise collectively form a foreground content of the marker board image (102).

In one or more embodiments, the buffer (101) is further configured to store the intermediate and final results of the system (100) that are directly or indirectly derived from the marker board image (102) and the video stream (102a). The intermediate and final results include at least an averaged sample (103), a binarized sample (104), a center of mass (COM) (105), a stable sample count (106), a changing status (107), and the static written content (108). Each of these intermediate and final results is described below in detail.

In one or more embodiments, the averaged sample (103) is an average of a contiguous portion of the video stream (102a), where the contiguous portion corresponds to a short time period (e.g., 0.25 seconds) during the collaboration session. Each pixel of the averaged sample (103) is assigned an averaged pixel value of corresponding pixels in all images within the contiguous portion of the video stream (102a). For example, the marker board image (102) may be one of the images in the contiguous portion of the video stream (102a).

Furthermore, the averaged sample (103) represents one of multiple divided regions of the marker board. Each region is referred to as a tile and may be represented as a rectangle, square, or any other planar shape. In other words, the averaged sample (103) is the average of corresponding tiles in all images within the contiguous portion of the video stream (102a). Each tile in the images is the image of a corresponding tile of the marker board. In this disclosure, the term "tile" is also used to refer to an image of the tile.

As the marker board is divided into multiple tiles, the averaged sample (103) becomes part of a collection of averaged samples that represent, in combination, the entire writing surface of the marker board. Furthermore, as the video stream (102a) is divided into a sequence of contiguous portions, the averaged sample (103) is one averaged sample within a sequence of averaged samples.

In one or more embodiments, the binarized sample (104) is a binary mask generated using the averaged sample (103). Each pixel of the binarized sample (104) is assigned a binary value that represents the foreground pixels and the background pixels of the averaged sample (103). In this disclosure, the averaged sample (103) and the binarized sample (104) are both referred to as a sample of the video stream (102a). Furthermore, the sequence of averaged samples and the corresponding sequence of binarized samples are both referred to as the sequence of samples.

In one or more embodiments, the COM (105) is a pixel location in a tile and corresponding sample (e.g., averaged sample (103), binarized sample (104)) where the coordinates are averaged from all foreground pixels. As the user writes or draws into a particular tile, the COM (105) of the respective sample changes due to the user's hand motion and/or the added static written content (108).

In one or more embodiments, the stable sample count (106) is a count of the consecutive samples in the sequence of samples where the COM has not changed more than a predetermined threshold (e.g., 10 pixels). Generally, the stable sample count (106) is zero for a tile where the user is actively writing or drawing.

In one or more embodiments, the changing status (107) is a status of a sample indicating whether a significant change in the COM (105) has stabilized over a predetermined number (e.g., 10) of subsequent samples. A significant change in the COM (105) that has stabilized over the predetermined number (e.g., 10) of subsequent samples is referred to as a stabilized change.

In one or more embodiments of the invention, the analysis engine (109) is configured to generate a sequence of averaged samples (including the averaged sample (103)) and corresponding binarized samples (including the binarized sample (104)) from the video stream (102a). The analysis engine (109) is further configured to generate the COM (105) for each of the samples.

In one or more embodiments of the invention, the extraction engine (110) is configured to detect a stabilized change of the COM (105) in the sequence of samples, and to extract the static written content (108) in a corresponding tile of the video stream (102a) where the stabilized change is detected. As the user writes or draws across the entire writing surface of the marker board, the static written content (108) in the extracted tile of the video stream (102a) represents only a portion of the entire static written content (108) across the marker board.

In one or more embodiments of the invention, the collaboration engine (111) is configured to generate the static written content (108) by aggregating all portions of the static written content (108) in all of the tiles of the video stream. The collaboration engine (111) is further configured to send the entire or a portion of the static written content (108) to one or more collaborating users. The act of sending whether just a portion or the entirety of the static written content (108) to collaborating user(s) is referred to as an extraction update of the collaboration session.

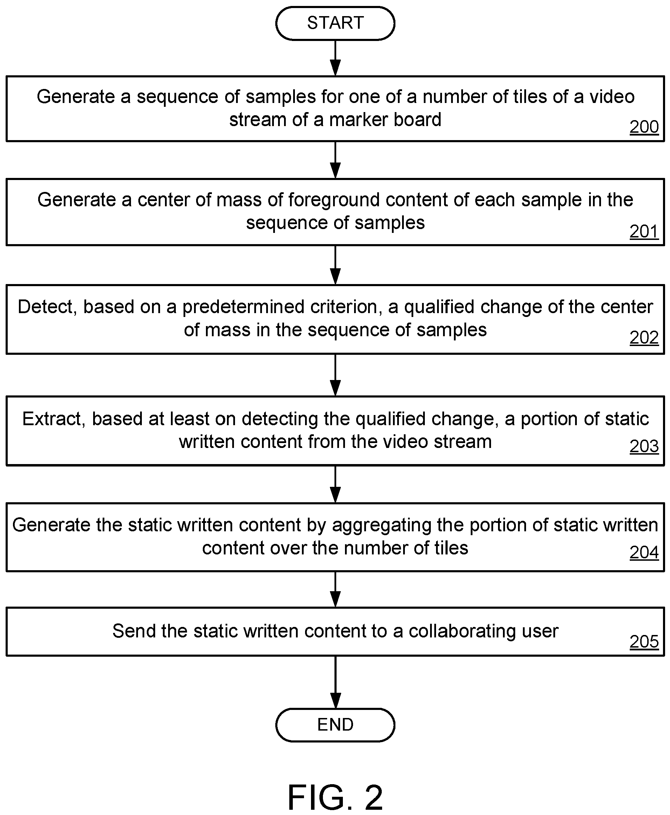

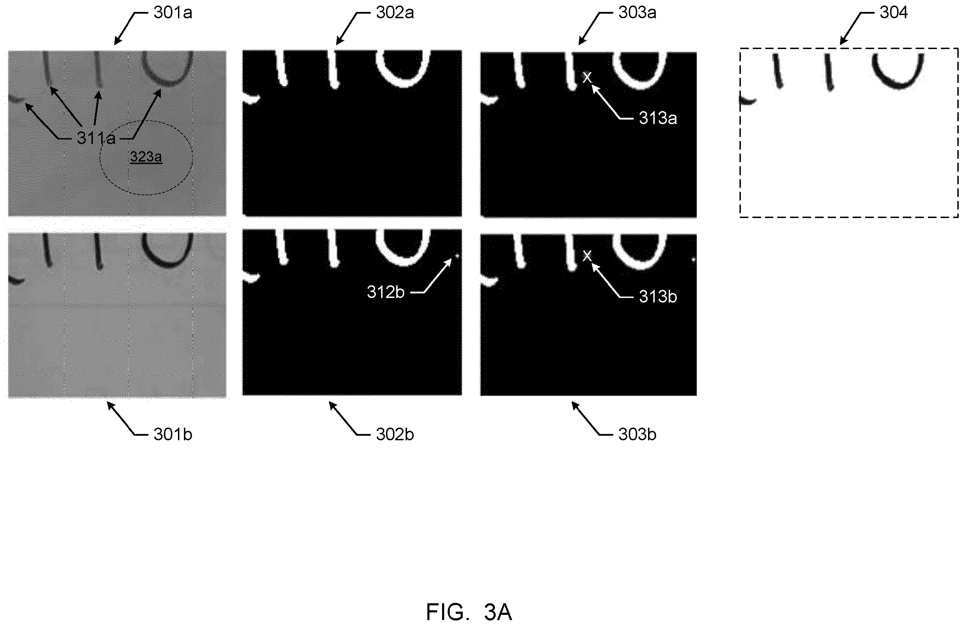

In one or more embodiments, the analysis engine (109), the extraction engine (110), and the collaboration engine (111) perform the functions described above using the method described in reference to FIG. 2 and the algorithms listed in TABLES 1-5 below. An example of automatically extracting static written content (108) from a video stream of the marker board is described in reference to FIGS. 3A-3D below.

Although the system (100) is shown as having four components (101, 109, 110, 111), in one or more embodiments of the invention, the system (100) may have more or fewer components. Furthermore, the functions of each component described above may be split across components. Further still, each component (101, 109, 110, 111) may be utilized multiple times to carry out an iterative operation.

FIG. 2 shows a flowchart in accordance with one or more embodiments of the invention. One or more of the steps in FIG. 2 may be performed by the components of the system (100), discussed above in reference to FIG. 1. In one or more embodiments, one or more of the steps shown in FIG. 2 may be omitted, repeated, and/or performed in a different order than the order shown in FIG. 2. Accordingly, the scope of the invention should not be considered limited to the specific arrangement of steps shown in FIG. 2.

Referring to FIG. 2 and as discussed above in reference to FIG. 1, initially in Step 200, a sequence of samples is generated from a video stream. The video stream is obtained from a camera oriented toward a marker board and includes a series of images of the marker board. In an example configuration of one or more embodiments, the optical axis of the camera is perpendicular to the writing surface of the marker board with the field of view aligned with the edges of the writing surface. Based on such configuration, every single pixel in each image in the video stream has a one-to-one correspondence with a specific location on the writing surface. Alternatively, in an example configuration with a different camera orientation and different field of view coverage, software corrections may be applied to each image of the video stream to correct any perspective distortions and/or to crop the images to match the writing surface with each pixel of the image.

In one or more embodiments, each image in the video stream is divided into a number of tiles. In one example, each image may be divided equally into rectangular shaped (or other planar shaped) tiles. Each tile in the image corresponds to a rectangular section of the marker board, and each rectangular section of the marker board is referred to as a tile of the marker board. In another example, the tiles may have different form factors within the image and across the marker board such as a dimension of a tile should be at least twice the width of writing/drawing strokes in the image.

In one or more embodiments, each sample in the sequence of samples corresponds to a tile of the marker board. In other words, the pixels of each sample correspond to locations across the corresponding tile of the marker board. In one or more embodiments, the series of images is divided into consecutive portions where each portion is contiguous and includes consecutive images in the video stream. In one example, the consecutive portions may all have the same number of consecutive images. In another example, the number of consecutive images may vary from one portion to another. Regardless of whether the number of consecutive images is constant or variable, the consecutive images in each portion are averaged and divided into the tiles for generating a corresponding sample. Each averaged sample is converted into a binarized sample where the two binary pixel values are used to identify the foreground pixels and the background pixels of the sample.

In Step 201, as discussed above in reference to FIG. 1, a COM of a foreground content in each sample is generated. In one or more embodiments, the COM is a location in the sample where the X coordinate is equal to the average of X coordinates of all foreground pixels in the sample and where the Y coordinate is equal to the average of Y coordinates of all foreground pixels in the sample.

In Step 202, as discussed above in reference to FIG. 1, a stabilized change of the COM is detected in the sequence of samples. In one or more embodiments, the COM in each sample and an average of certain number of preceding samples is compared against one another to detect a shift in COM that exceeds a predetermined threshold. The shift in COM exceeding the predetermined threshold is referred to as a significant change of the COM. A significant change of the COM followed by at least a predetermined number of stable samples is identified as the stabilized change of the COM.

In Step 203, as discussed above in reference to FIG. 1, a portion of static written content is extracted from the video stream based at least on detecting the stabilized change of the COM. In one or more embodiments, foreground pixels in the averaged sample where the stabilized change of the COM is detected are extracted as a portion of the overall static written content. Multiple averaged samples among the predetermined number of stable samples following the significant change of the COM may be statistically processed together for the extraction.

In Step 204, as discussed above in reference to FIG. 1, the static written content is generated by aggregating all portions of the static written content in all of the tiles on an image. In one or more embodiments, Steps 201 through 204 are performed for all of the tiles concurrently using parallel computing threads. For example, each tile may be processed by one of the parallel computing threads.

In Step 205, as discussed above in reference to FIG. 1, the static written content is sent to a collaborating user. In an example scenario, the video stream is a live video stream of a collaboration session. Based on the concurrent processing using parallel computing threads, the static written content is sent to the collaborating user in real-time with respect to the live video stream. In other words, the static written content is sent within a relatively short time (e.g., less than 0.5 seconds) after the content is written/drawn on the marker board.

An example main algorithm for performing Steps 200 to 205 above is listed in TABLE 1 below.

**TABLE 1**

| | | | | |
|---|---|---|---|---|
| 1. A *current step* is computed as the current frame number modulo the number of *frames per sample,* which is a parameter that identifies how many tile frames are averaged together into a single sample. | | | | |
| 2. If *current step* is zero, then this is the first frame in a sample set and so initialize an empty image *avg_color* with dimensions equal to the size of the tile. | | | | |
| 3. Add in the current tile to *avg_color.* | | | | |
| 4. If *current step* is equal to one less than *frames per sample,* then: | | | | |
| | 4.1. Compute *sample num* as the frame number integer divided by *frames per sample.* | | | |
| | 4.2. If the *sample num* is zero, then initialize *changing* to false. | | | |
| | 4.3. Generate a true average of the previous set of frames by dividing out each pixel in *avg_color* by *frames_per_sample.* | | | |
| | 4.4. Threshold *avg_color* to make a mask *avg_thresh* to identify pixels of foreground content in contrast with the whiteboard background. Although there are several ways to do this, it has been experimentally determined that an ideal way is to use an adaptive thresholding function on each color channel and then combine each channel together using a bitwise OR operation. More specifically: | | | |
| | | 4.4.1. Initialize a binary single-channel image *avg_thresh* to empty. | | |
| | | 4.4.2. Repeat for each channel in *avg_color*: | | |
| | | | 4.4.2.1. Execute the OpenCV **adaptivethreshold** function on the channel | |
| | | | 4.4.2.2. Bitwise-or the results of **adaptivethreshold** into *avg_thresh.* | |
| | 4.5. Clear out holes in *avg_thresh* using morphological operations. This will help identify areas of strokes where the whiteboard marker may have faded and consequentially were not initially identified in *avg_thresh.* One way to accomplish this is with OpenCV functions: | | | |
| | | 4.5.1. Obtain a morphological cross structuring element of a pre-configured size using **getStructuringElement.** | | |
| | | 4.5.2. Dilate *avg_thresh* using OpenCV **dilate** | | |
| | | 4.5.3. Erode *avg_thresh* using OpenCV **erode** | | |
| 4.6. Slightly increase the size of the mask to capture edges of strokes. Otherwise these may flicker from sample to sample. Again, this can be accomplished with OpenCV morphological operations: | | | | |
| | 4.6.1. Obtain a morphological cross structuring element of a pre-configured size using **getStructuringElement.** | | | |
| | 4.6.2. Dilate *avg_thresh* using OpenCV **dilate** | | | |
| 4.7. Identify the *current center of mass* in *avg_thresh.* This is done by summing up the total position of all marked (foreground) pixels in *avg_thresh* and dividing by the number of marked (foreground) pixels in *avg_thresh.* | | | | |
| 4.8. Execute one of two branches: | | | | |
| | If not *changing* then: | | | |
| | 4.8.1. Call a function *process_sample()* [detailed below] with parameters *sample_num, avg_color,* and *avg_thresh* which returns a Boolean. Set *changing* to that return value. | | | |
| | 4.8.2. If *changing* then: | | | |
| | | 4.8.2.1.Initialize an empty image *avg_change* with dimensions equal to the size of the tile. | | |
| | | 4.8.2.2.Add in *avg_thresh* to *avg_change.* | | |
| | | 4.8.2.3. Set *n_stable_samples* to 0. | | |
| | Else (is *changing*): | | | |
| | 4.8.4. Call a function *is_stable()* [detailed below] which returns a Boolean. Set *stable* to that return value. | | | |
| | | If *stable* then: | | |
| | | 4.8.4.1. Increment *n_stable_samples* by 1. | | |
| | | 4.8.4.2. Add in *avg_thresh* to *avg_change.* | | |
| | | 4.8.4.3. If *n_stable_samples* is greater than or equal to a preconfigured window of stability samples (e.g. 10) then: | | |
| | | | 4.8.4.3.1. Set *changing* to false. | |
| | | | 4.8.4.3.2. Call a function *sample_differs()* [detailed below] with parameters *sample_num, avg_color,* and *avg_thresh* which returns a Boolean. Set *differs* to that return value. | |
| | | | 4.8.4.3.3.If *differs* then: | |
| | | | | 4.8.4.3.3.1.Divide *avg_change* by the preconfigured window of stability samples (e.g. 10). |
| | | | | 4.8.4.3.3.2.Threshold *avg_change* such that values below 127 get set to 0 and values greater than or equal to 127 get set to 255. |
| | | | | 4.8.4.3.3.3.Use a logical and operation between *avg_color* and *avg_change* to mark just the color pixels that are stable. This increases the compressibility of the tile. |
| | | | | 4.8.4.3.3.4.Add *avg_change* as an alpha channel to *avg_color.* |
| | | | | 4.8.4.3.3.5. Announce that the tile is stable, publishing *avg_change* as a representation of the stable tile image. |
| | | Else (not *stable*): | | |
| | | 4.8.4.4. Set *n_stable_samples* to zero. | | |
| | | 4.8.4.5. Reinitialize *avg_change* to an empty image | | |
| | | 4.8.4.6. Add in *avg_thresh* to *avg_change.* | | |
| 4.9. Push *current center of mass* onto a vector *center of mass history,* keeping around only the *n* most recent center of masses, where n is a preconfigured constant (e.g. 5). | | | | |

The function *process sample (sample*_*num, avg_color, avg_thresh)* is listed in TABLE 2 below.

**TABLE 2**

| | | |
|---|---|---|
| 1. Set a bool *changing* to false. | | |
| | If *sample_num* is 0 then: | |
| | 1.1. Clear the *center of mass history.* | |
| | else (*sample_num >* 0): | |
| | 1.2. Compute the *average center of mass* across the *center of mass history.* | |
| | 1.3. Set a *last_stable_center_of_mass* to *average_center_of_mass.* | |
| | 1.4. Call a function *significant_change* [detailed below] with parameters *last_stable_center_of_mass* and *cur_center_of_mass* which returns a Boolean. Set *sig_change* to that return value. | |
| | 1.5. If *sig_change* then: | |
| | | 1.5.1. Set *changing* to true. |
| | | 1.5.2. Clear the *center of mass history.* |
| 2. Return *changing.* | | |

The function *is*_*stable* is listed in TABLE 3 below.

**TABLE 3**

| | | |
|---|---|---|
| 1. | Compute the *average_center_of_mass* across the *center_of_mass_history.* | |
| 2. | Call a function *significant_change* [detailed below] with parameters *average_center_of_mass* and *cur_center_of_mass* which returns a Boolean. Set *sig_change* to that return value. | |
| | If *sig_change* then: | |
| | 2.1. Clear the *center_of_mass_history.* | |
| | 2.2. Return false. | |
| | Else: | |
| | 2.3. Return true. | |

The function *sample*_*differs (sample*_*num, avg_color, avg_thresh)* is listed in TABLE 4 below.

**TABLE 4**

| | |
|---|---|
| 1. Compute the *average_center_of_mass* across the *center_of_mass_history.* | |
| | |
| 2. Call a function *significant_change* [detailed below] with parameters *last_stable_center_of_mass* and *average_center_of_mass* which returns a Boolean. Set *sig_change* to that return value. | |
| | If *sig_change* then: |
| | 2.1. Set *last_stable_center_of_mass* to *average_center_of_mass.* |
| | 2.2. Clear the *center_of_mass_history.* |
| | 2.3. Return true. |
| | Else: |
| | 2.4. Return false. |

The function *significant_change(center_of_mass1, center_of_mass2)* is listed in TABLE 5 below.

**TABLE 5**

| |
|---|
| 1. Identify the Euclidean distance d between *center_ of_mass1* and *center_of_mass2.* |
| |
| 2. Return whether or not d is greater than a predetermined threshold distance (e.g. 3). |

FIGS. 3A-3D show an implementation example in accordance with one or more embodiments of the invention. The implementation example shown in FIGS 3A-3D is based on the system and method flowchart described in reference to FIGS. 1-2 and the algorithms listed in TABLES 1-5 above. In one or more embodiments of the invention, one or more elements shown in FIGS 3A-3D may be omitted, repeated, and/or organized in a different arrangement. Accordingly, the scope of the invention should not be considered limited to the specific arrangement of elements shown in FIGS 3A-3D.

In the example of FIGS. 3A-3D described below, static written content on a whiteboard is extracted and published so that the extracted static written content may be automatically shared with other participants (i.e., collaborating users) in a collaboration session. In a conventional process, when a user has content that was ready to be shared with remote participants (i.e., collaborating users), the user would manually initiate a capture of the content and send the captured content to remote participants in the collaboration session. The conventional process was cumbersome and prevented remote participants from getting content in near real time. In contrast, the example method described below enables automatic capturing of a user's whiteboard content for real-time sharing with remote collaborators.

The example method operates on a series of images from a video stream. The video stream may be a pre-recorded collaboration session or a live stream of a current collaboration session. The process described below is repeated for each image of the video stream.

Each image in the video stream is divided into tiles and analyzed for new static written content. Once new static written content has been identified, an update of the tile's static written content is sent to remote participants in the collaboration session.

Automatically transmitting new and stable content when detected advantageously eliminates user's manual initiation of the capture and sending of the content to remote participants in the collaboration session. Such transmission of a tile's static written content based on determining when new content is available and stable also advantageously minimizes (i.e., reduces) the number of necessary content data transmissions to remote participants in the collaboration session. Furthermore, during the content data transmission, the tiles without new content are excluded from the transmission. Excluding the tiles with no new content advantageously minimizes (i.e., reduces) the amount of content data in each of the content data transmission to remote participants in the collaboration session. Furthermore, automatically transmitting new and stable content will also allow content to be seen by remote participants sooner than had the user manually initiated the capture.

For each tile, each set of consecutive n (n = 10 in an example implementation) images in the video stream are averaged to generate an averaged sample that minimizes the effects of motion and maximizes the effects of static written content. Any physical marks on the whiteboard identified as pixels in each image of the set show up strongly (i.e., exhibit higher numerical values) in the averaged sample. In contrast, any user motion is likely identified as disparate pixels in different images and consequently does not show up strongly (i.e., exhibit lower numerical values) in the averaged sample. For example, consider the two averaged samples (301a) and (301b) shown in FIG. 3A. The averaged sample (301a) corresponds to a tile in the result of averaging a first set of 10 images, and the averaged sample (301b) corresponds to a tile in the result of averaging the next set of 10 images. A faint blur (323a) exists in the averaged sample (301a) as a result of the user's hand captured in some of the first set of 10 images. Regardless, the static written content (311a) is not obscured in the averaged sample (301a) and matches the static written content seen in the averaged sample (301b). For example, the static written content (311a) may correspond to a fraction of the user's writing (e.g., $110) that falls within the particular tile. Specifically, each of the four separate elements in the static written content (311a) corresponds to a fraction of one of the four symbols $, 1, 1, and 0 written by the user.

Furthermore, averaging tiles in images into averaged samples smooths out imaging sensor noise that occurs from image to image. Image processing of the particular tile, as described below, occurs on an averaged-sample-by-averaged-sample basis. The averaged-sample-by-averaged-sample processing corresponds to the sub-steps of step 4 in the main algorithm listed in TABLE 1 above.

Consistent with the main algorithm listed in TABLE 1, the variable "changing" is initially set to false. This variable "changing" tracks whether or not motion is currently being detected in the averaged sample. User motion in the tile is determined by tracking a COM of all foreground content as described below. In particular, the foreground content includes both static written content and artifacts due to the user motion and/or sensor noise.

The next step of the averaged-sample-by-averaged-sample processing, as detailed by items 4.4 through 4.6 in the main algorithm listed in TABLE 1 above, is to identify foreground content in each averaged sample. This is mainly done by running an adaptive thresholding function on each color channel of the averaged sample and using bitwise OR to combine all color channels together into a single binary image, such as the binarized sample (302a) or the binarized sample (302b). Furthermore, some post processing steps are executed to generate the binarized samples (302a) and (302b) for improving the quality of foreground identification in the binary image, such as healing holes (due to faint portions of the pen stroke) and slightly expanding the foreground area (to compensate in imaging artifacts from one averaged sample to another). Identifying foreground content in the two averaged samples (301a) and (301b) results in the corresponding binarized samples (302a) and (302b). In the example of one or more embodiments shown in FIG. 3A, the white pixels in each of the binarized samples (302a) and (302b) correspond to the identified foreground in the corresponding averaged sample.

Continuing with the averaged-sample-by-averaged-sample processing, the next step is to identify the COM in each binarized sample. The COM is computed as the average location of all foreground (white) pixels in the binarized sample. This is used for motion tracking and stability identification. For the two binarized samples (302a) and (302b), the COM is identified by the icon "x" to generate the marked samples (303a) and (303b). The averaged sample (301a) and the binarized sample (302a) correspond to the marked sample (303a) with the COM (313a), the averaged sample (301b) and the binarized sample (302b) correspond to the marked sample (303b) with the COM (313b). A slight shift exists from the COM (313a) to the COM (313b) due to a noise pattern (312b) being identified as additional foreground from the binarized sample (302a) to the binarized sample (302b).

Once the COM has been identified for each averaged sample, one of two image processing branches (i.e., branch A and branch B) is followed dependent upon whether or not the current state of the tile is considered to be changing or not. If the tile is currently considered to not be changing, then the averaged sample is processed to determine whether it is now changing, as described here (branch B). If the averaged sample being processed is the first averaged sample in the collaboration session (e.g., sample 0), then the variable "changing" is initialized to be false. A vector, center of mass_history, is cleared and initialized with the first computed COM. The center_of_mass_history vector is limited to a small size of s (e.g., s = 5 in an example implementation) elements and records the most recent s centers of mass. The center_of_mass_history vector is used to smooth out small changes in the COM (e.g., as seen in the marked samples (303a) and (303b) above) by allowing the most recent COM to be averaged together among the s elements.

Otherwise, if the averaged sample being processed is not the first averaged sample, the last_stable_center_of_mass is first computed as the average of all centers of mass in center_of_mass_history. It is then determine whether or not there is a significant change from the last_stable_center_of_mass to the currently identified COM in the averaged sample being processed. A significant change occurs when the Euclidean distance between the two points has changed more than a predetermined threshold t (e.g., t = 3 in an example implementation). If a significant change has been identified, then the center_of_mass_history vector is cleared, the variable "changing" is set to true, and a count of stable averaged samples, n_stable_averaged_samples, is initialized to 0. Otherwise, if no significant change has been identified, the variable "changing" is set to false.

If a significant change has been identified (changing is true), the image processing follows the aforementioned branch A and an average change image is created to keep track of the average change across the next several averaged samples where the algorithm looks for stability. If a count of the average sample being stable exceeds a stability window after the significant change, the significant change is a stabilized change. In other words, the stabilized change includes both a significant change and the average sample being stable longer than the stability window after the significant change. The average change image is the average of the subsequent binarized samples (i.e., foreground content) over the stability window and is used to identify which corresponding color pixels to include in a potential update of the tile's static written content. In other words, only those color pixels corresponding to the majority of the foreground pixels across the stability window will be sent in the update. This is done to remove potential flickering at the time of the update.

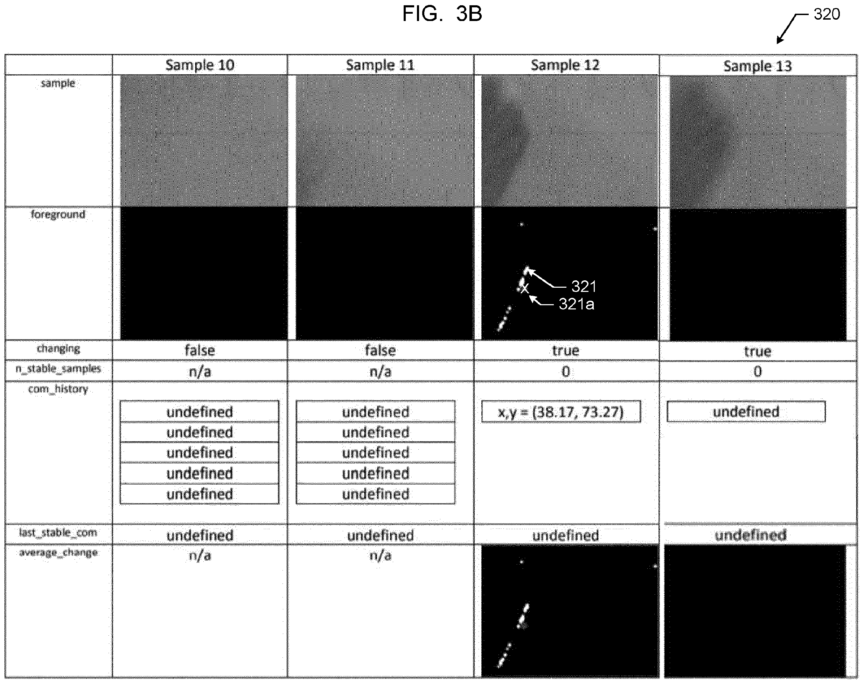

FIG. 3B shows a sequence (320) of averaged samples (i.e., sample 10 through sample 13) along with intermediate results of the image processing described above. The sequence (320) corresponds to a time period when the user starts writing on the whiteboard with the user's hand waving in front of the camera and entering the particular tile. As shown in FIG. 3B, the first row identifies the sample number in the sequence, the second row "sample" shows the averaged samples, the third row "foreground" shows the corresponding marked samples each containing the foreground content with available COM, the fourth row "changing" shows contents of the variable "changing," the fifth row "n_stable_samples" shows contents of the variable, "n_stable_averaged_samples," the sixth row "com_history" shows contents of the center_of_mass_history vector, the seventh row "last_stable_com" shows contents of the variable "last_stable_center_of_mass," and the eighth row "average_change" shows the corresponding average change images.

As further shown in FIG. 3B, "changing" is false for sample 10. For sample 11, part of the user's hand enters the tile without creating enough contrast to be identified as foreground. Therefore, "changing" remains false for sample 11. For samples 10 and 11, the COM is undefined (e.g., represented as positon (-100, -100)). For sample 12, enough of the user's hand is stable within the tile to register a foreground edge (321). As a result, the COM (321a) makes a significant shift from sample 11 to sample 12 and the tile enters a changing state ("changing" = true). Accordingly, the image processing starts to follow the aforementioned branch A

In branch A of image processing, starting with sample 13, it is determined whether the tile has stabilized. In other words, it is determined whether the COM has moved significantly again from the last averaged position. For sample 13, the COM has moved significantly, and the tile is considered to be still changing. In sample 13, the user's hand does not register a hard edge and so no foreground content is identified. Consequently, the COM becomes undefined and the tile is not considered stabilized. In such a case for sample 13, the center_of_mass_history is cleared, n_stable_averaged_samples is set to 0, and the average change image is cleared and initialized with the current binarized sample.

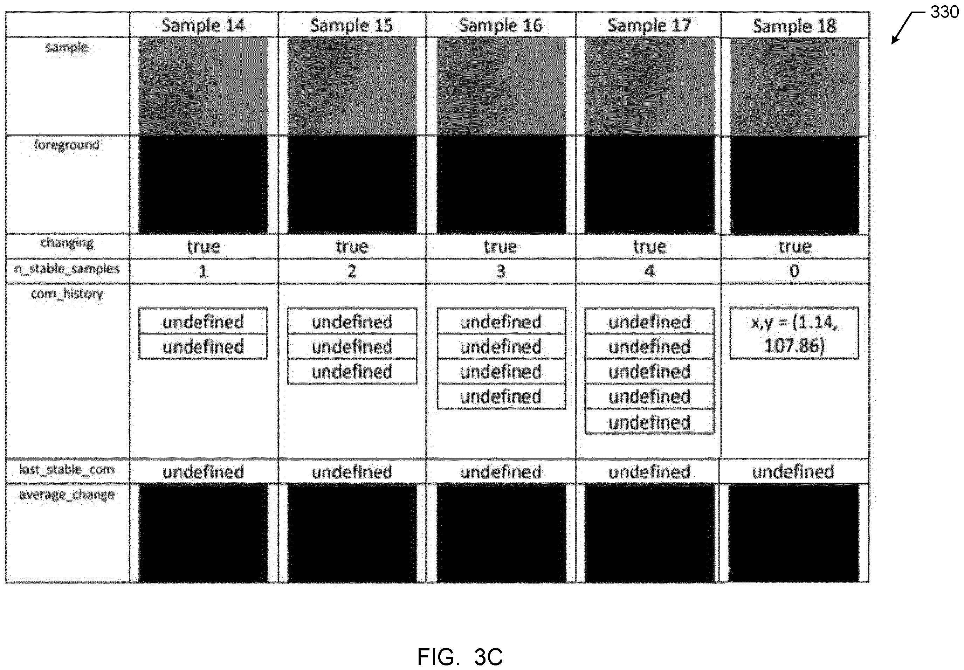

FIG. 3C shows the continuing sequence (330) of averaged samples (i.e., sample 14 through sample 18) immediately following the sequence (320) depicted in FIG. 3B above. The sequence (330) corresponds to the time period when the user is actively writing on the whiteboard while the user's hand is waving in front of the camera and captured as a moving blur. FIG. 3C is depicted based on the same row definition as FIG. 3B. Following branch A of image processing, for sample 14, the COM has not moved from sample 13 in FIG. 3B and is considered as currently being stable. Therefore, the number of stable averaged samples (n_stable_averaged_samples) is incremented by 1 from 0, and the current binarized sample is averaged into the average change image. It is then determined whether n_stable_averaged_samples is greater than or equal to a predefined stability window w (e.g., w = 10 samples in an example implementation). From sample 14 through sample 17, the COM has not moved for each successive sample. Like sample 14, each of samples 15, 16, and 17 is also considered as currently being stable with the number of stable averaged samples (n_stable_averaged_samples) successively incremented to 2, 3, and 4, and each current binarized sample is averaged into the average change image. It is then determined whether n_stable_averaged_samples is greater than or equal to a predefined stability window w (e.g., w = 10 samples in an example implementation). In sample 18, the COM is detected to move once again with n_stable_averaged_samples less than w (i.e., 10). Therefore, the variable "changing" remains true for samples 14 through 18 indicating that the averaged sample has not been stable long enough without changing. From sample 18 onward, the tile is no longer stable until a sequence of 10 stable samples are encountered starting with sample 23.

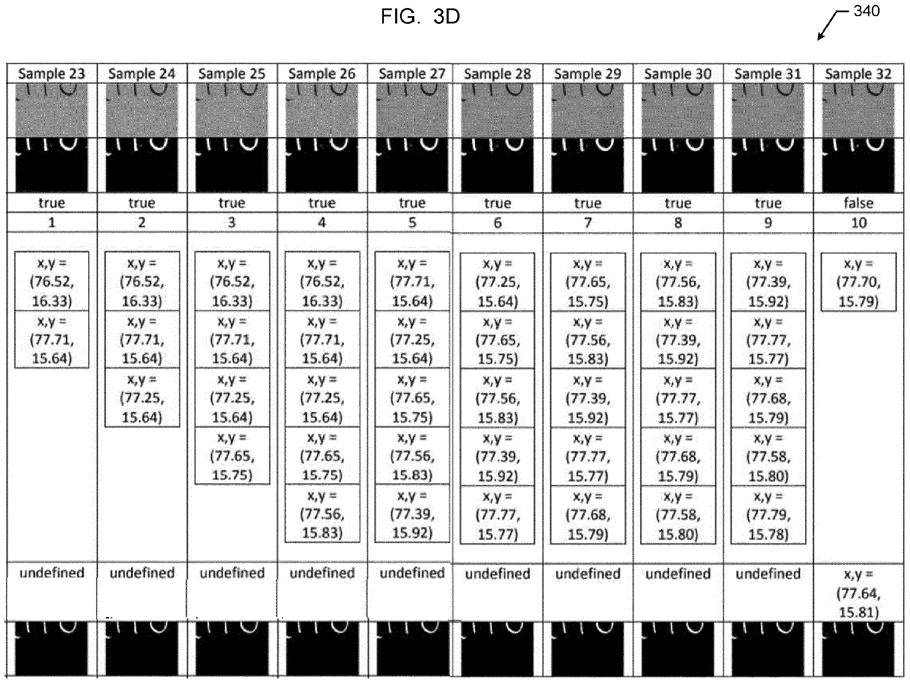

FIG. 3D shows the sequence (340) of averaged samples (i.e., sample 23 through sample 32) following the sequence (330) depicted in FIG. 3C above. The sequence (340) corresponds to the time period immediately after the user completes writing on the portion of the whiteboard where the tile now includes the user's writing without being obscured by the user's hand. FIG. 3D is depicted based on the same row definition as FIG. 3B and 3C above. Samples 19 through 22 are omitted for compact illustration purposes. Continuing to follow branch A of image processing, if the n_stable_averaged_samples is determined to be greater or equal to w (e.g., 10), then the variable "changing" is set to false indicating the averaged sample is stable long enough without changing. This occurs with sample 32 where the n_stable_averaged_samples has been successively incremented to the size of the stability window as the COM stayed stable. It is then determined if there is a significant change from last_stable_center_of_mass to the average of the current center_of_mass_history. In such a case, last_stable_center_of_mass is updated to the average of center_of_mass_history and center_of_mass_history is cleared. The average change image (an average of the previous 10 binarized samples) is itself thresholded, with values below 127 set to 0 and all others set to 255 and used as a mask to identify which pixels in the averaged sample qualify as foreground for the update. Having identified a long enough sequence of stable images (as shown in samples 23 through 32) after the significant change of COM, a stabilized change is identified and an update is constructed via a bitwise AND operation of the average change image and the averaged sample 32. The update is announced for the tile to collaborating users. The update is shown in FIG. 3A as the image (304) and includes only the static written content.

In one or more embodiments, regardless of whether branch A or branch B of the image processing has been taken, the current COM is pushed onto the back of center_of_mass_history, clearing the oldest entry if it exceeds the size of s.

Embodiments of the invention may be implemented on virtually any type of computing system, regardless of the platform being used. For example, the computing system may be one or more mobile devices (e.g., laptop computer, smart phone, personal digital assistant, tablet computer, or other mobile device), desktop computers, servers, blades in a server chassis, or any other type of computing device or devices that includes at least the minimum processing power, memory, and input and output device(s) to perform one or more embodiments of the invention. For example, as shown in FIG. 4, the computing system (400) may include one or more computer processor(s) (402), associated memory (404) (e.g., random access memory (RAM), cache memory, flash memory, etc.), one or more storage device(s) (406) (e.g., a hard disk, an optical drive such as a compact disk (CD) drive or digital versatile disk (DVD) drive, a flash memory stick, etc.), and numerous other elements and functionalities. The computer processor(s) (402) may be an integrated circuit for processing instructions. For example, the computer processor(s) may be one or more cores, or micro-cores of a processor. The computing system (400) may also include one or more input device(s) (410), such as a touchscreen, keyboard, mouse, microphone, touchpad, electronic pen, or any other type of input device. Further, the computing system (400) may include one or more output device(s) (408), such as a screen (e.g., a liquid crystal display (LCD), a plasma display, touchscreen, cathode ray tube (CRT) monitor, projector, or other display device), a printer, external storage, or any other output device. One or more of the output device(s) may be the same or different from the input device(s). The computing system (400) may be connected to a network (412) (e.g., a local area network (LAN), a wide area network (WAN) such as the Internet, mobile network, or any other type of network) via a network interface connection (not shown). The input and output device(s) may be locally or remotely (e.g., via the network (412)) connected to the computer processor(s) (402), memory (404), and storage device(s) (406). Many different types of computing systems exist, and the aforementioned input and output device(s) may take other forms.

Software instructions in the form of computer readable program code to perform embodiments of the invention may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that when executed by a processor(s), is configured to perform embodiments of the invention.

Further, one or more elements of the aforementioned computing system (400) may be located at a remote location and be connected to the other elements over a network (412). Further, one or more embodiments of the invention may be implemented on a distributed system having a plurality of nodes, where each portion of the invention may be located on a different node within the distributed system. In one or more embodiments, the node corresponds to a distinct computing device. Alternatively, the node may correspond to a computer processor with associated physical memory. The node may alternatively correspond to a computer processor or micro-core of a computer processor with shared memory and/or resources.

One or more embodiments of the present invention provide the following improvements in electronic collaboration technologies: automatically sharing user content on a marker board with remote collaborating users without the user having to manually send the content data; limiting the amount of content data transmission to the portion of the marker board with new content; and minimizing the number of content data transmissions by automatically determining when the new content is stable prior to transmission.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method to extract content written on a marker board, the method comprising:
generating, by a computer processor, a sequence of samples from a video stream, wherein the video stream comprises a series of images of the marker board;
generating, by the computer processor, a center of mass (COM) of foreground content of each sample in the sequence of samples;
detecting, by the computer processor and based on a predetermined criterion, a stabilized change of the COM in the sequence of samples; and
extracting, based at least on detecting the stabilized change, a portion of static written content from the video stream.

2. The method of claim 1, wherein the predetermined criterion for detecting the stabilized change comprises an amount of change of the COM and a stability window of the change of the COM.

3. The method of claim 1, wherein generating the sequence of samples comprises:
dividing each image in the series of images into a plurality of tiles; and
generating said each sample in the sequence of samples based on a corresponding tile of the plurality of tiles.

4. The method of claim 3, wherein generating said each sample in the sequence of samples comprises:
dividing the series of images into a plurality of consecutive portions; and
generating, for said each sample, an average of the tile over a corresponding portion of the series of images.

5. The method of claim 3, further comprising:
generating the static written content by aggregating the portion of static written content over the plurality of tiles; and
sending the static written content to a collaborating user.

6. The method of claim 1
wherein the video stream is a live video stream of a collaboration session, and
wherein the static written content is sent to a collaborating user in real-time with respect to the live video stream.

7. The method of claim 1
wherein the video stream is a pre-recorded video stream of a collaboration session.

8. A system for extracting content written on a marker board, the system comprising:
a memory; and
a computer processor connected to the memory and that:
generates a sequence of samples from a video stream, wherein the video stream comprises a series of images of the marker board;
generates a center of mass (COM) of foreground content of each sample in the sequence of samples;
detects, based on a predetermined criterion, a stabilized change of the COM in the sequence of samples; and
extracts, based at least on detecting the stabilized change, a portion of static written content from the video stream.

9. The system of claim 8, wherein the predetermined criterion for detecting the stabilized change comprises an amount of change of the COM and a stability window of the change of the COM.

10. The system of claim 8, wherein generating the sequence of samples comprises:
dividing each image in the series of images into a plurality of tiles; and
generating said each sample in the sequence of samples based on a corresponding tile of the plurality of tiles.

11. The system of claim 10, wherein generating said each sample in the sequence of samples comprises:
dividing the series of images into a plurality of consecutive portions; and
generating, for said each sample, an average of the tile over a corresponding portion of the series of images.

12. The system of claim 10, the computer processor connected to the memory further:
generates the static written content by aggregating the portion of static written content over the plurality of tiles; and
sends the static written content to a collaborating user.

13. The system of claim 8,
wherein the video stream is a live video stream of a collaboration session, and
wherein the static written content is sent to a collaborating user in real-time with respect to the live video stream.

14. The system of claim 8,
wherein the video stream is a pre-recorded video stream of a collaboration session.

15. A non-transitory computer readable medium (CRM) storing instructions for extracting content written on a marker board, wherein the computer readable program code, when executed by a computer, comprises functionality for:
generating a sequence of samples from a video stream, wherein the video stream comprises a series of images of the marker board;
generating a center of mass (COM) of foreground content of each sample in the sequence of samples;
detecting, based on a predetermined criterion, a stabilized change of the COM in the sequence of samples; and
extracting, based at least on detecting the stabilized change, a portion of static written content from the video stream.

16. The non-transitory CRM of claim 15, wherein the predetermined criterion for detecting the stabilized change comprises an amount of change of the COM and a stability window of the change of the COM.

17. The non-transitory CRM of claim 15, wherein generating the sequence of samples comprises:
dividing each image in the series of images into a plurality of tiles; and
generating said each sample in the sequence of samples based on a corresponding tile of the plurality of tiles.

18. The non-transitory CRM of claim 17, wherein generating said each sample in the sequence of samples comprises:
dividing the series of images into a plurality of consecutive portions; and
generating, for said each sample, an average of the tile over a corresponding portion of the series of images.

19. The non-transitory CRM of claim 17, wherein the computer readable program code, when executed by the computer, further comprises functionality for:
generating the static written content by aggregating the portion of static written content over the plurality of tiles; and
sending the static written content to a collaborating user.

20. The non-transitory CRM of claim 15
wherein the video stream is a live video stream of a collaboration session, and
wherein the static written content is sent to a collaborating user in real-time with respect to the live video stream.
